# FASCICULE DE BREVET EUROPEEN

(11) **EP 3 945 258 B1**
(45) Date de publication et mention de la délivrance du brevet: **29.05.2024**
(21) Numéro de dépôt: 21188647.8
(22) Date de dépôt: 30.07.2021
(51) Int. Cl.: E06B 7/10, F24F 8/192, F24F 8/30, F24F 13/18, F24F 13/28, E06B 9/17

(54) **ENSEMBLE DE FILTRATION POUR UN OUVRANT DE BÂTIMENT**
FILTERANORDUNG FÜR EINEN GEBÄUDEÖFFNUNGSFLÜGEL
FILTERING ASSEMBLY FOR A DOOR OF A BUILDING

(30) Priorité: 30.07.2020 FR 2008080
(43) Date de publication de la demande: 02.02.2022
(73) Titulaire: Teqoya, 33730 Villandraut (FR); Coferm'ing, 85530 La Bruffière (FR)
(72) Inventeur: GUITTON, Pierre, 75020 PARIS (FR); AUDUREAU, Joseph, 85530 LA BRUFFIERE (FR)
(74) Mandataire: Yes My Patent

(56) Documents cités:
- WO-A1-2016/032930
- BE-A3- 1 019 147
- CN-A- 105 649 519
- DE-U1- 29 808 237
- KR-B1- 102 029 672

## Description

Le contexte technique de la présente invention est celui des logements conçus pour stocker un volet roulant, et plus particulièrement des moyens filtrants équipant de tels logements, ces moyens filtrants étant destinés à filtrer un air extérieur au logement et entrant dans ledit logement. Plus particulièrement, l'invention a trait à un ensemble de filtration pour un ouvrant de bâtiment.

Dans l'état de la technique, on connait des systèmes mécaniques de filtration d'air pour ouvrant de bâtiment. En particulier, ces systèmes mécaniques de filtration d'air visent à être associés à des coffres de volets roulants installés au-dessus d'ouvrants du bâtiment. Les systèmes mécaniques de filtration d'air comprennent un filtre mécanique ayant une certaine porosité. Ce filtre mécanique sert d'écran pour filtrer mécaniquement l'air et retenir des particules.

Les systèmes mécaniques de filtration d'air pour ouvrant de bâtiment permettent d'alimenter en air neuf le bâtiment qu'ils équipent, notamment lorsque celui-ci est équipé d'un système à ventilation mécanique contrôlée, aussi appelé VMC. Lorsqu'ils équipent un ouvrant de bâtiment, les systèmes mécaniques de filtration d'air connus permettent de filtrer un air extérieur au bâtiment en le débarrassant des particules qu'il véhicule. En effet, l'air neuf non filtré, extérieur au bâtiment, est vicié, chargé d'une pollution extérieure. L'air neuf vicié est chargé de particules fines et ultrafines typique des milieux urbains et périurbains. On y trouve des composés organiques (émissions de moteurs diesel et essence, brouillards industriels, poussières, cendres, fumées, suies) et des particules biologiques (pollen, spores, bactéries, virus). Les systèmes mécaniques de filtration d'air visent à filtre les particules comprises entre 1 et 10 microns (PM10, PM2,5, PM1).

Un premier inconvénient connu de ces systèmes de filtration mécaniques est qu'ils sont soumis dans certains pays à une réglementation contraignante qui interdit de disposer des médias filtrants dans le passage d'air des entrées de ventilation des logements d'habitation. Ils ne sont donc pas toujours utilisables en l'état ou sont rendus conformes à la législation en vigueur par des contournements techniques qui les rendent mois efficaces.

Un deuxième inconvénient de ces systèmes mécanique de filtration d'air est qu'ils entraînent une perte de charge non souhaitée sur les systèmes de ventilation des bâtiments sur lesquels ils sont intégrés. Dès lors, on limite la perte de charge du flux d'air en limitant la capacité de filtration du filtrage mécanique : les performances de ces systèmes mécaniques de filtration d'air sont ainsi limitées, ces systèmes mécaniques de filtration étant peu efficaces pour les particules ultrafines. Par ailleurs, les filtres qui équipent systèmes mécaniques de filtration d'air s'encrassent rapidement. Des filtres colmatés de particules ont une qualité de filtration dégradée. De plus, le débit d'approvisionnement air neuf dans le bâtiment est à nouveau affecté et réduit. Il est nécessaire de nettoyer les filtres mécaniques à fréquence régulière et de les changer pour maintenir une filtration optimale et un débit de renouvellement d'air suffisant.

On connait en outre le document BE1019147A3 qui décrit une installation de protection solaire et de ventilation d'une fenêtre ou d'une porte, l'installation comportant un coffre enfermant un volet roulant, un canal de ventilation s'étendant au travers du coffre et des moyens d'insonorisation formant un guide d'air selon une trajectoire angulaire. Le canal de ventilation enferme un filtre formé par une brosse s'étendant dans le canal de ventilation et qui est faite d'un matériau statiquement chargé électriquement afin qu'il puisse attirer les particules de poussière contenues dans l'air traversant le canal de ventilation. Le filtre est ici un filtre électrostatique simple qui est initialement chargé mais non polarisé électriquement.

On connait aussi le document DE29808237U1 qui décrit un caisson de volet roulant comportant un logement de caisson logeant (i) un arbre de volet roulant monté mobile en rotation sur des paliers latéraux et (ii) un dispositif de ventilation pourvu d'éléments de récupération de chaleur. Le système de ventilation comporte un filtre mécanique afin de filtrer les particules présentes dans l'air traversant le caisson.

On connait le document WO2016/032930A1 qui décrit un système de filtre à air de taille ajustable pouvant être utilisé sur un ouvrant de fenêtre.

On connait enfin les documents KR102029672B1 et CN105649519A qui décrivent des systèmes de ventilation et de filtration d'un air entrant au travers d'un ouvrant de bâtit.

La présente invention a pour objet de proposer un nouvel ensemble de filtration afin de répondre au moins en grande partie aux problèmes précédents et de conduire en outre à d'autres avantages.

Un autre but de l'invention est de permettre de filtrer les particules fines et ultrafines en respectant les réglementations en vigueur - notamment en France - sur la ventilation des locaux d'habitation.

Un autre but de l'invention est de permettre d'assurer un débit d'air constant dans l'ensemble de filtration.

Un autre but de l'invention est de proposer un ensemble de filtration ayant une tendance réduite à l'encrassage.

Un autre but de l'invention est de proposer un ensemble de filtration améliorant la qualité d'un air neuf entrant dans un bâtiment équipé dudit ensemble de filtration.

Un autre but de l'invention est de proposer un ensemble de filtration réutilisable pour un grand nombre de cycles de filtration.

Selon l'invention, on atteint au moins l'un des objectifs précités avec un ensemble de filtration pour un ouvrant de bâtiment selon la revendication 1, cet ensemble de filtration comportant (i) un coffre destiné à être fixé en applique contre l'ouvrant, le coffre délimitant un espace de stockage pour un dispositif occultant de l'ouvrant, (ii) un conduit de ventilation traversant le coffre, le conduit de ventilation mettant en communication fluidique l'espace de stockage et une extrémité du conduit de ventilation extérieure au coffre, (iii) un coffrage de filtration solidaire du coffre, l'extrémité du conduit de ventilation débouchant dans le coffrage de filtration, (iv) un système de filtration logé dans le coffrage de filtration, le système de filtration étant configuré pour filtrer des particules présentes dans un flux d'air sortant du conduit de ventilation, le système de filtration est du type d'un système de filtration électrostatique, et est caractérisé en ce qu'il comporte un étage d'ionisation de particules présentes dans un flux d'air traversant le système de filtration, un étage de collection situé en aval de l'étage d'ionisation, relativement à un sens d'écoulement du flux d'air traversant le système de filtration, et un étage de polarisation configuré pour polariser sélectivement l'étage d'ionisation et l'étage de collection.

L'ensemble de filtration conforme à l'invention est destiné à un ouvrant de bâtiment. On comprend que l'ouvrant est par exemple un panneau mobile compris dans une porte, une fenêtre, ou une trappe. Dans un exemple alternatif, l'ouvrant est un faux-ouvrant, fixe, telle une baie vitrée fixe, ou un dormant.

L'ensemble de filtration conforme à l'invention est destiné à être traversé par un flux d'air entrant dans le bâtiment. L'ensemble de filtration est destiné à filtrer le flux d'air
par filtration électrostatique, grâce au système de filtration électrostatique. En particulier, le conduit de ventilation forme un espace de circulation d'air entre le coffre et le coffrage de filtration.

Le coffre de l'ensemble de filtration conforme à l'invention est destiné au stockage du dispositif occultant de l'ouvrant. Le dispositif occultant permet d'occulter partiellement ou totalement l'ouvrant, lorsqu'il est déplié devant ledit ouvrant. En fonction de la position et/ou de l'installation du coffre par rapport à l'ouvrant, le dispositif occultant est situé à l'intérieur ou à l'extérieur du bâtiment, relativement à l'ouvrant en regard duquel il est installé. A titre d'exemples non limitatifs, le dispositif occultant peut prendre la forme d'un volet roulant, d'un volet à lattes, d'un rideau enroulable, d'un store, d'un filtre, d'un voilage enroulable ou de n'importe quel autre dispositif destiné à être placé en regard d'un ouvrant de bâtiment. Le coffre peut être encastré ou apparent.

Le coffre de l'ensemble de filtration conforme à l'invention est destiné à s'intégrer à proximité de l'ouvrant d'un bâtiment, tel que par exemple au-dessus, en dessous ou latéralement à l'ouvrant. Ainsi positionné, le dispositif occultant peut être déroulé pour couvrir, totalement ou partiellement, l'ouvrant du bâtiment.

Le coffre comprend une ouverture destinée au passage du dispositif occultant. Cette ouverture forme ainsi une entrée d'air de l'ensemble de filtration conforme à l'invention destinée à alimenter en air neuf l'intérieur du bâtiment. Ainsi, lorsque l'ensemble de filtration conforme à l'invention est mis en oeuvre et que le dispositif occultant sort de l'ouverture du coffre, ledit dispositif occultant peut couvrir l'ouvrant du bâtiment tout en permettant une ventilation de l'intérieur du bâtiment via l'ensemble de filtration ; et lorsque le dispositif occultant est logé dans son coffre de rangement, le renouvèlement de l'air à l'intérieur du bâtiment est toujours possible via l'ouverture du coffre.

Le conduit de ventilation de l'ensemble de filtration conforme à l'invention met en communication fluidique l'espace de stockage du coffre et le coffrage de filtration. En d'autres termes, le conduit de ventilation forme un espace de circulation d'air entre le coffre et le coffrage de filtration. Le conduit de ventilation est amont au système de filtration électrostatique par rapport au sens de circulation d'un flux d'air traversant l'ensemble de filtration conforme à l'invention.

Ainsi, dans l'ensemble de filtration conforme à l'invention, le système de filtration de type électrostatique permet de charger électriquement des particules circulant avec le flux d'air. Les particules chargées électriquement sont piégées dans le système de filtration électrostatique. En sortie du système de filtration électrostatique, le flux d'air comprend moins de particules qu'à son entrée dans l'espace de stockage du coffre.

L'invention conforme à son premier aspect permet ainsi avantageusement de purifier un air capté au niveau du coffre et destiné à alimenter l'intérieur du bâtiment équipé de l'ensemble de filtration selon l'invention. Le système de filtration électrostatique de l'ensemble de filtration conforme à l'invention permet de minimiser les pertes de charges. Autrement dit le système de filtration électrostatique permet de maintenir un débit de circulation d'air constant au travers de l'ensemble de filtration conforme à l'invention.

Dans le système de filtration selon l'invention, l'étage d'ionisation de particules est configuré pour ioniser les particules présentes dans un flux d'air traversant le système de filtration. L'étage d'ionisation de particules permet de modifier une charge électrique initiale desdites particules, par l'ajout ou le retrait de charge. On parle de particules ionisées. Dans le système de filtration, l'étage de collection permet de collecter les particules ionisées. L'étage d'ionisation de particule donne une charge électrique suffisante aux particules pour que ces dernières soient collectées dans l'étage de collection. L'étage de collection est configuré pour générer un champ électrostatique. L'étage de collection permet à ce que le flux d'air traversant le système de filtration soit débarrassé des particules que le flux d'air véhicule. En effet, les particules ionisées traversant l'étage de collection sont alors attirées par les armatures dudit étage de collection.

L'ensemble de filtration conforme à l'invention comprend avantageusement au moins un des perfectionnements ci-dessous, les caractéristiques techniques formant ces perfectionnements pouvant être prises seules ou en combinaison:
- l'étage d'ionisation comporte un ou plusieurs ioniseurs reliés électriquement en parallèles les uns des autres par rapport à l'étage de polarisation. Le ou les ioniseurs permettent d'ioniser les particules présentes dans un flux d'air traversant le système de filtration. L'étage de polarisation permet de configurer la modification de charge induite par le ou les ioniseurs ;
- l'étage de collection comporte un ou plusieurs collecteurs reliés électriquement en parallèles les uns des autres par rapport à l'étage de polarisation, chaque collecteur comportant une pluralité d'armatures situées en regard deux à deux et polarisées deux à deux en opposition l'une par rapport à l'autre. D'une manière plus générale, l'étage de collection comporte un ou plusieurs collecteurs reliés électriquement en parallèles les uns des autres par rapport à l'étage de polarisation, chaque collecteur comportant une pluralité d'armatures situées en regard deux à deux, chaque paire d'armatures situées en regard l'une de l'autre présentant une différence de potentiel non nulle entre elles. Eventuellement, pour chaque paire d'armatures ainsi formées, une première armature est polarisée selon une tension de polarisation non nulle et une deuxième armature est reliée électriquement à une masse électrique de l'ensemble de filtration conforme au premier aspect de l'invention. Chaque armature prend la forme d'une carte plane. La pluralité d'armatures du collecteur ou de chacun des collecteurs permet de collecter les particules ionisées. Dans la pluralité d'armatures, deux armatures situées en regard l'une de l'autre et présentant une différence de potentiel non nulle entre elles génèrent un champ électrostatique. Le champ électrostatique généré forme des lignes perpendiculaires aux armatures. Le champ électrostatique oriente ainsi les particules ionisées présentes dans le flux d'air vers l'une des deux armatures. Avantageusement, le collecteur est un collecteur électrostatique. Le collecteur permet de minimiser les dégagements d'ozone ;
- selon une première variante de réalisation, l'étage de polarisation comporte une première source d'énergie électrique configurée pour polariser l'étage d'ionisation, et une deuxième source d'énergie électrique configurée pour polariser l'étage de collection. Selon une deuxième variante de réalisation, alternative à la première variante de réalisation, l'étage de polarisation comporte une unique source d'énergie électrique configurée pour polariser simultanément l'étage d'ionisation et l'étage de collection. Dans l'une ou l'autre des variantes de réalisation, la première et/ou la deuxième source d'énergie électrique est commune avec une alimentation électrique d'un moteur d'enroulement du dispositif occultant dans le coffre de l'ensemble de filtration conforme au premier aspect de l'invention ;
- lorsque l'étage de polarisation comporte une première source d'énergie électrique configurée pour polariser l'étage d'ionisation, et une deuxième source d'énergie électrique configurée pour polariser l'étage de collection, tous les ioniseurs de l'étage d'ionisation sont polarisés par la première source d'énergie électrique ;
- lorsque l'étage de polarisation comporte une première source d'énergie électrique configurée pour polariser l'étage d'ionisation, et une deuxième source d'énergie électrique configurée pour polariser l'étage de collection, tous les collecteurs de l'étage de collection sont polarisés par la deuxième source d'énergie électrique ;
- lorsque l'étage de polarisation comporte une première source d'énergie électrique configurée pour polariser l'étage d'ionisation, et une deuxième source d'énergie électrique configurée pour polariser l'étage de collection, la première source d'énergie électrique et/ou la deuxième source d'énergie électrique est une source de tension, préférentiellement une source de haute tension. Par exemple, la première source d'énergie électrique et/ou la deuxième source d'énergie électrique est un générateur de haute tension ;
- le coffrage de filtration comporte une trappe articulée permettant d'accéder au système de filtration de l'ensemble de filtration conforme au premier aspect de l'invention. Cette configuration avantageuse permet notamment de faciliter les opérations de maintenance. Complémentairement, l'ensemble de filtration comporte un mécanisme d'extraction permettant de faciliter l'extraction du système de filtration hors du coffrage de filtration. A titre d'exemple non limitatif, le mécanisme d'extraction prend la forme par exemple de rails sur lesquels le système de filtration est monté ;
- le coffrage de filtration comporte une sortie de ventilation orientée selon une direction perpendiculaire par rapport au conduit de ventilation pris au niveau de son extrémité. La sortie de ventilation permet de dévier le flux d'air traversant l'ensemble de filtration selon l'invention par rapport à l'extrémité du conduit de ventilation. Par direction perpendiculaire, on comprend que la sortie de ventilation est orientée de façon sensiblement perpendiculaire par rapport au conduit de ventilation pris au niveau de son extrémité. Autrement dit, la sortie de ventilation est orientée à 90° plus ou moins 5° par rapport au conduit de ventilation pris au niveau de son extrémité. D'une manière plus générale, le coffrage de filtration comporte une sortie de ventilation orientée selon une direction coudée par rapport au conduit de ventilation pris au niveau de son extrémité. En d'autres termes, la sortie de ventilation forme un angle non nul par rapport au conduit de ventilation : le conduit de ventilation s'étend de manière non rectiligne entre le coffre et le coffrage de filtration, de sorte que l'air pénétrant dans le bâtiment par l'intermédiaire de l'ensemble de filtration conforme au premier aspect de l'invention soit dévié lorsqu'il passe du coffre au coffrage de filtration. Cette configuration permet avantageusement de limiter l'encombrement de l'ensemble de filtration conforme au premier aspect de l'invention. Dans n'importe laquelle de ses réalisations, lorsqu'il équipe un ouvrant de bâtiment dans un bâtiment, l'ensemble de filtration selon l'invention a sa sortie de ventilation préférentiellement orientée vers un plafond d'une pièce dotée de l'ouvrant du bâtiment ;
- la sortie de ventilation prend la forme d'une grille ajourée. La grille ajourée ferme la sortie de ventilation et autorise la sortie du flux d'air depuis le coffrage de filtration ;
- le coffrage de filtration de l'ensemble de filtration comporte une grille d'aération située au niveau de l'extrémité du conduit de ventilation. La grille d'aération ferme l'extrémité du conduit de ventilation et autorise l'entrée du flux d'air vers le coffrage de filtration ;
- l'étage de collection comporte un premier collecteur et un deuxième collecteur, les collecteurs étant disposés l'un par rapport à l'autre selon une configuration « en V ». Dans un tel étage de collection, le flux d'air traversant le coffrage de filtration est réparti en deux portions, une portion traversant le premier collecteur et une portion traversant le deuxième collecteur. Une configuration à deux collecteurs améliore le rapport efficacité de filtration par rapport à l'encombrement des collecteurs. La configuration en V des deux collecteurs l'un par rapport à l'autre oriente le flux d'air divisé selon deux directions divergentes ;
- les armatures de chaque collecteur de l'étage de collection ont une même forme parallélépipédique ou losangée ;
- une entrée du premier collecteur, située à proximité de l'étage d'ionisation, est alignée avec une entrée du deuxième collecteur située à proximité dudit étage d'ionisation. Les entrées de chacun des collecteurs sont dans le prolongement l'une de l'autre ;
- un premier ioniseur de l'étage d'ionisation est située dans le prolongement d'une entrée du premier collecteur de l'étage de collection, et un deuxième ioniseur de l'étage d'ionisation est située dans le prolongement d'une entrée du deuxième collecteur de l'étage de collection. Une telle configuration permet d'ioniser les particules circulant dans le flux d'air sur leur trajectoire, en direction des collecteurs. Une configuration à deux ioniseurs améliore le rapport efficacité de filtration par rapport à l'encombrement des ioniseurs. La portion de flux d'air destiné à entrer dans le premier collecteur comprend les particules préférentiellement ionisées par le premier ioniseur. La portion d'air destiné à entrer dans le deuxième collecteur comprend les particules préférentiellement ionisées par le deuxième ioniseur ;
- une sortie du premier collecteur, située à proximité de la sortie de ventilation du coffrage de filtration, est alignée avec une sortie du deuxième collecteur située à proximité de ladite sortie de ventilation. Les sorties de chacun des collecteurs sont dans le prolongement l'une de l'autre ;
- l'étage de collection comporte un déflecteur central reliant le premier collecteur au deuxième collecteur. Le déflecteur central est configuré pour empêcher forcer l'air traversant l'ensemble de filtration de passer dans l'étage de collection. A cet effet, le déflecteur central est par exemple situé au niveau des entrées respectives de chaque premier et deuxième collecteur. Le déflecteur central oriente le flux d'air et les particules qu'il transporte vers le premier collecteur ou vers le deuxième collecteur. Le déflecteur central impose au flux d'air de circuler dans l'étage de collection ;
- l'étage d'ionisation comporte un troisième ioniseur situé dans une position intermédiaire entre le premier ioniseur et le deuxième ioniseur, le troisième ioniseur étant situé en regard du déflecteur central de l'étage de collection. Un troisième ioniseur améliore la filtration du flux d'air en augmentant l'ionisation des particules ;
- l'ensemble de filtration comporte un dispositif de décharge électrostatique couplé électriquement au coffrage de filtration et configuré pour permettre d'évacuer des charges électriques en contact avec le coffrage de filtration ;
- le dispositif de décharge électrostatique prend la forme d'un fil conducteur ou d'une surface électriquement conductrice, le dispositif de décharge électrostatique étant relié à une masse électrique. Le dispositif de décharge électrostatique est configuré pour permettre d'éviter une accumulation de charges électrostatiques dans le coffrage de filtration et notamment à proximité de la zone d'ionisation. Complémentairement, le dispositif de décharge électrostatique permet aussi d'orienter le flux des ions vers l'étage de collection, créant ainsi un chemin préférentiel dans la veine d'air permettant de favoriser l'homogénéisation de la densité en ion dans la veine d'air ;
- l'étage de collection comporte un déflecteur de sortie situé entre chaque collecteur et le coffrage de ventilation. Le déflecteur de sortie oriente le flux d'air hors du coffrage de ventilation ;
- le déflecteur de sortie est parallèle au déflecteur central. Avantageusement, le déflecteur de sortie est dans le prolongement des sorties de chacun des collecteurs.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig.1] illustre une vue schématique de l'ensemble de filtration conforme à l'invention ;
[fig.2] illustre une vue en coupe transversale de l'ensemble de filtration, en situation, selon un mode de réalisation conforme à l'invention ;
[fig.3] illustre une vue schématique du coffrage de filtration et du système de filtration de l'ensemble de filtration conforme à l'invention dans une première variante de réalisation ;
[fig.4] illustre une vue en coupe du coffrage de filtration et du système de filtration de l'ensemble de filtration conforme à l'invention illustré en FIGURE 3 ;
[fig.5] illustre une mise en oeuvre schématique du système de filtration de l'ensemble de filtration conforme à l'invention illustré en FIGURE 3 ;
[fig.6] illustre une deuxième variante de réalisation de l'ensemble de filtration conforme à l'invention.

Bien entendu, les caractéristiques, les variantes et les différentes formes de réalisation de l'invention peuvent être associées les unes avec les autres, selon diverses combinaisons, dans le cadre de l'invention qui est définie par les revendications.

Sur les figures, les éléments communs à plusieurs figures conservent la même référence.

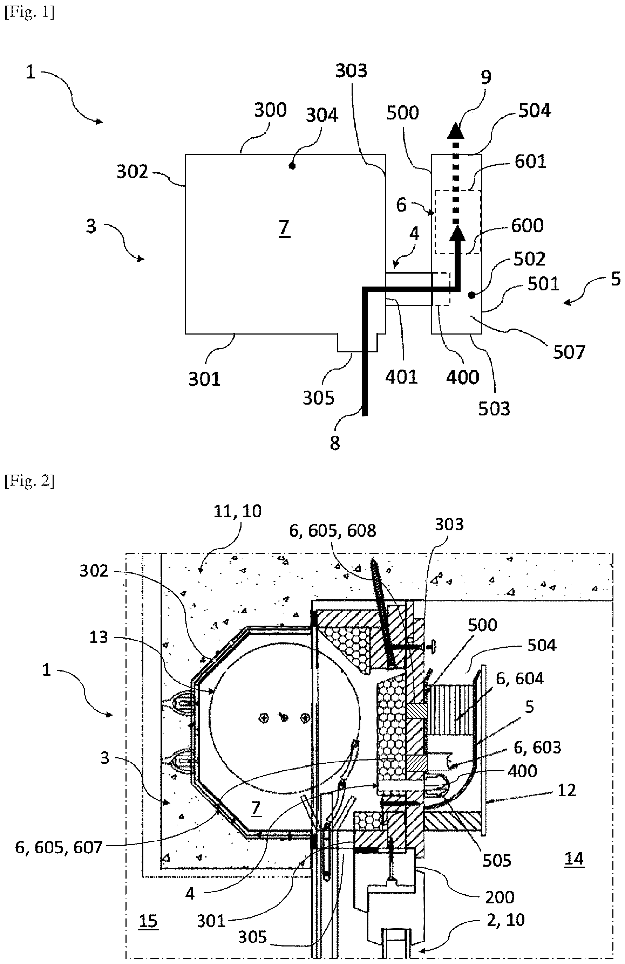

La FIGURE 1 montre un ensemble de filtration 1 pour un ouvrant de bâtiment. L'ensemble de filtration 1 conforme à l'invention est vu de profil. L'ensemble de filtration 1 illustré en FIGURE 1 comporte un coffre 3, un conduit de ventilation 4, un coffrage de filtration 5 et un système de filtration 6 de type d'un système de filtration électrostatique.

Le coffre 3 délimite un espace de stockage 7 du volet roulant. Le coffre 3 comprend une paroi supérieure 300 opposée à une paroi inférieure 301. La paroi supérieure 300 du coffre 3 et la paroi inférieure 301 du coffre 3 sont reliées l'une à l'autre par une paroi avant 302 d'une part, et par une paroi arrière 303 opposée à la paroi avant 302 d'autre part. Des parois latérales 304 du coffre 3 ferment l'espace de stockage 7. Une des parois latérales 304 du coffre 3 est en arrière-plan et de ce fait non visible en FIGURE 1. Le coffre 3 est schématisé par un parallélépipède, mais on comprend qu'il peut prendre des formes plus complexes et facettées, comme c'est le cas en FIGURE 2.

Le coffre 3 illustré en FIGURE 1 comprend une ouverture 305 destinée au passage du dispositif occultant. L'ouverture 305 du coffre 3 forme une fente longitudinale ménagée dans la paroi inférieure 301 du coffre 3, en arrière du coffre 3.

Le conduit de ventilation 4 traverse le coffre 3. Le conduit de ventilation 4 comprend une extrémité 400 extérieure au coffre 3, et une extrémité opposée 401 débouchant dans le coffre 3. Le conduit de ventilation 4 met en communication fluidique l'espace de stockage 7 et l'extrémité 400 du conduit de ventilation 4 extérieure au coffre 3. L'extrémité 400 du conduit de ventilation 4 extérieure au coffre 3 débouche dans un espace de filtration 507 délimité par le coffrage de filtration 5. L'extrémité opposée 401 délimite une ouverture ménagée dans la paroi arrière 303 du coffre 3, en partie basse du coffre 3.

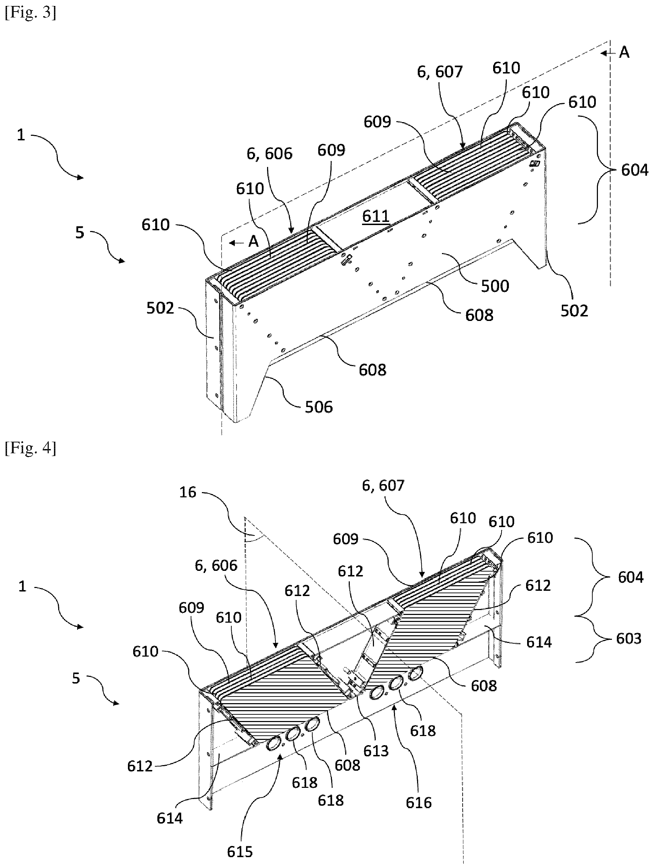

Le coffrage de filtration 5 comprend une façade avant 500 opposée à une façade arrière 501, des façades latérales 502 visibles en FIGURE 3 reliant la façade arrière 501 et la façade avant 500, et une façade inférieure 503 reliant la façade arrière 501, la façade avant 500 et les façades latérales 502. Le coffrage de filtration 5 comporte une sortie de ventilation 504. La sortie de ventilation 504 du coffrage de filtration 5 est orientée selon une direction perpendiculaire par rapport au conduit de ventilation 4 pris au niveau de son extrémité 400.

L'extrémité 400 du conduit de ventilation 4 extérieure au coffre 3 débouche dans le coffrage de filtration 5 en bas de la façade avant 500 du coffrage de filtration 5.

Le système de filtration 6 est logé dans le coffrage de filtration 5, au-dessus de l'extrémité 400 du conduit de ventilation 4 extérieure au coffre 3. Le système de filtration 6 comprend une entrée d'air 600 située en dessous d'une sortie d'air 601. La sortie d'air 601 du système de filtration 6 est en regard de la sortie de ventilation 504 du coffrage de filtration 5.

L'ensemble de filtration 1 selon l'invention est configuré pour être traversé par un flux d'air, représenté en FIGURE 1 par des flèches 8, 9. Le système de filtration 6 est configuré pour filtrer des particules présentes dans un flux d'air sortant du conduit de ventilation 4. En amont du système de filtration 6, une première flèche 8 représente un flux d'air vicié, chargé de particules. En aval du système de filtration 6, une deuxième flèche 9 représente le flux d'air filtré, autrement dit moins chargé en particules que le flux d'air vicié. L'ensemble de filtration 1 selon l'invention est configuré pour que tout le flux d'air entrant dans le coffrage de filtration 5 traverse le système de filtration 6.

En considérant le sens de circulation du flux d'air illustré par les flèches 8 et 9 en FIGURE 1, on peut définir un circuit de circulation du flux d'air depuis l'ouverture 305 du coffre 3, par lequel entre le flux d'air, jusqu'à la sortie de ventilation 504 du coffrage de filtration 5. L'ouverture 305 du coffre 3 permet d'approvisionner en air l'ensemble de filtration 1 selon l'invention, avec le flux d'air vicié. Puis le flux d'air vicié circule dans le conduit de ventilation 4. Le flux d'air vicié sort du conduit de ventilation 4 par son extrémité 400 extérieure au coffre 3. Dans le conduit de ventilation 4, le flux d'air vicié circule, en l'espèce, selon une direction sensiblement horizontale. Depuis l'extrémité 400 du conduit de ventilation 4, le flux d'air vicié intègre le système de filtration 6 via l'entrée d'air 600, avant de sortir, purifié, par la sortie d'air 601 du système de filtration 6. En l'espèce, dans le coffrage de filtration 5, et notamment dans le système de filtration 6, le flux d'air circule selon une direction sensiblement verticale. Enfin, le flux d'air purifié sort de l'ensemble de filtration 1 selon l'invention par la sortie de ventilation 504 du coffrage de filtration 5.

La FIGURE 2 montre l'ensemble de filtration 1 selon un mode de réalisation de l'invention. L'ensemble de filtration 1 équipe un ouvrant 2 de bâtiment 10. L'ensemble de filtration 1 est au-dessus de l'ouvrant 2 du bâtiment 10. Le coffre 3 est encastré dans une structure 11 du bâtiment 10. La paroi inférieure 301 du coffre 3 est fixée en applique contre une partie supérieure 200 de l'ouvrant 2. Le coffrage de filtration 5 est recouvert d'un caisson d'habillage 12 laissant libre la sortie de ventilation 504 dudit coffrage de filtration 5.

Dans l'ensemble de filtration 1 selon l'invention, l'espace de stockage 7 du dispositif occultant loge un dispositif occultant 13. Le dispositif occultant 13 traverse en partie l'ouverture 305 du coffre 3, en avant de l'ouvrant 2 de bâtiment 10.

Dans l'ensemble de filtration 1 selon l'invention, façade avant 500 du coffrage de filtration 5 est fixée solidairement contre la paroi arrière 303 du coffre 3.

On distingue un environnement extérieur 15 au bâtiment 10, en avant de l'ensemble de filtration 1 selon l'invention, et un environnement intérieur 14 au bâtiment 10, en arrière de l'ensemble de filtration 1 selon l'invention. L'ouvrant 2 du bâtiment 10 et la structure du bâtiment 10 séparent l'environnement extérieur 15 au bâtiment 10, dont l'air est chargé de particules, et l'environnement intérieur 14 au bâtiment 10, dont l'air est moins chargé en particules suite à la mise en oeuvre du système de filtration 6 de l'ensemble de filtration 1 selon l'invention.

La FIGURE 2 montre que le système de filtration 6 de l'ensemble de filtration 1 selon l'invention comporte un étage d'ionisation 603, un étage de collection 604 et un étage de polarisation 605.

L'étage de collection 604 est situé en aval de l'étage d'ionisation 603, relativement au sens d'écoulement du flux d'air traversant le système de filtration 6 représenté en FIGURE 1.

L'étage de polarisation 605 est configuré pour polariser sélectivement l'étage d'ionisation 603 et l'étage de collection 604. L'étage de polarisation 605 comporte une première source d'énergie électrique 607 configurée pour polariser l'étage d'ionisation 603. L'étage de polarisation 605 comporte une deuxième source d'énergie électrique 608, distincte de la première source d'énergie électrique 607, configurée pour polariser l'étage de collection 604.

Le coffrage de filtration 5 de l'ensemble de filtration 1 comporte une grille d'aération 505 située au niveau de l'extrémité 400 du conduit de ventilation 4. La grille d'aération 505 forme une barrière mécanique autorisant la circulation du flux d'air.

En référence aux FIGURES 3, 4, 5 et 6, l'ensemble de filtration 1 selon l'invention est illustré de façon partielle.

La FIGURE 3 montre le coffrage de filtration 5 logeant le système de filtration 6. Le coffrage de filtration 5 comprend la façade avant 500 et les façades latérales 502. La façade avant 500 du coffrage de filtration 5 comprend un dégagement 506 longitudinal destiné à loger l'extrémité du conduit de ventilation débouchant dans le coffrage de filtration 5.

La FIGURE 3 montre que l'étage de collection 604 comporte plusieurs collecteurs 606, 607, en l'espèce un premier collecteur 606 et un deuxième collecteur 607. Chaque collecteur 606, 607 comprend une entrée 608 opposée à une sortie 609.

Chaque collecteur 606, 607 comporte une pluralité d'armatures 610 parallèles les unes aux autres. Les armatures 610 sont situées en regard deux à deux et polarisées deux à deux en opposition l'une par rapport à l'autre.

Un déflecteur de sortie 611 est situé entre chaque collecteur 606, 607 et le coffrage de filtration 5. Les sorties 609 des collecteurs 606, 607 sont alignés entre elles et avec le déflecteur de sortie 611.

La FIGURE 4 montre une coupe du coffrage de filtration 5 selon une coupe AA illustrée en FIGURE 3 passant une armature 610 de chacun des collecteurs 606, 607, de sorte à visualiser le système de filtration 6 de type d'un système de filtration électrostatique.

Le premier collecteur 606 et le deuxième collecteur 607 sont disposés l'un par rapport à l'autre selon une configuration « en V ». Dans la configuration « en V », les armatures 610 de chaque collecteur 606, 607 de l'étage de collection 604 ont une même forme parallélépipédique, avec des bords 612 opposés parallèles deux à deux dans le collecteur considéré 606, 607. Les bords 612 des armatures 610 s'étendent entre la sortie 609 et l'entrée 608 du collecteur 606, 607 considéré. Le premier collecteur 606 est symétrique au deuxième collecteur 607 selon un plan médian 16 au coffrage de filtration 5.

L'étage de collection 604 comporte un déflecteur central 613 reliant le premier collecteur 606 au deuxième collecteur 607. Le déflecteur central 613 s'étend entre les entrées 608 respective des collecteurs 606, 607. L'entrée 608 du premier collecteur 606 est alignée avec l'entrée 608 du deuxième collecteur 607 et avec le déflecteur central 613. L'étage de collection 604 comporte en outre deux déflecteurs latéraux 614, alignés avec le déflecteur central 613. Chacun des deux déflecteurs latéraux 614 encadre l'entrée 608 de l'un des collecteurs 606, 607 avec le déflecteur central 613.

La FIGURE 4 montre que l'étage d'ionisation 603 comporte deux ioniseurs 615, 616. Un premier ioniseur 615 de l'étage d'ionisation 603 est situé dans le prolongement de l'entrée 608 du premier collecteur 606 de l'étage de collection 604. Un deuxième ioniseur 616 de l'étage d'ionisation 603 est située dans le prolongement de l'entrée 608 du deuxième collecteur 607 de l'étage de collection 604. Le premier ioniseur 615 de l'étage d'ionisation 603 est situé devant l'entrée 608 du premier collecteur 606 de l'étage de collection 604. Le deuxième ioniseur 616 de l'étage d'ionisation 603 est située est situé devant l'entrée 608 du deuxième collecteur 607 de l'étage de collection 604.

Chaque ioniseur 615, 616 comprend des optiques coniques 618. En l'espèce, chaque ioniseur 615, 616 comprend trois optiques coniques 618.

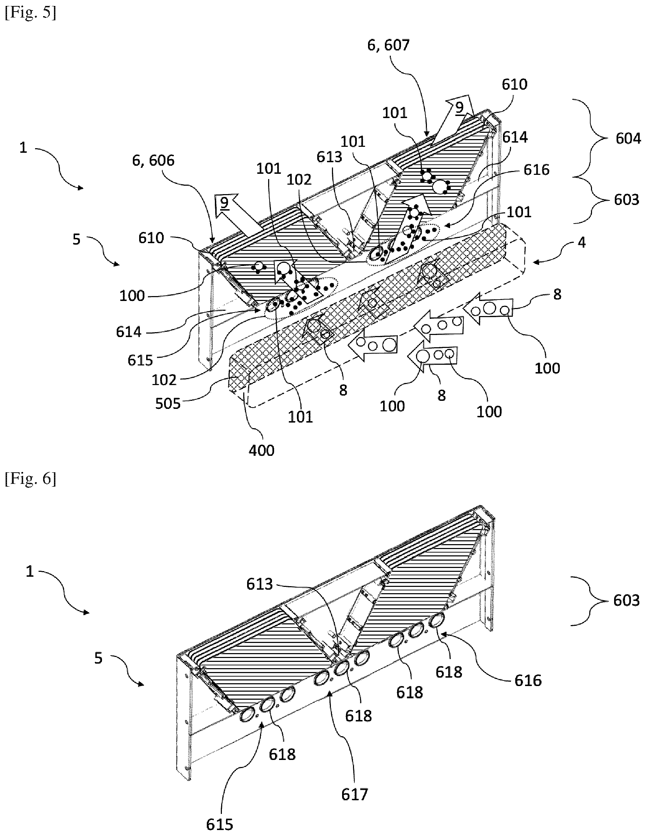

La FIGURE 5 illustre comment le flux d'air est filtré au sein du coffrage de filtration 5. La FIGURE 5 montre la coupe du coffrage de filtration 5 selon une coupe AA comme celle illustré en FIGURE 4. Pour la compréhension de la mise en oeuvre de l'invention, l'extrémité 400 du conduit de ventilation 4 est également représentée dans la FIGURE 5, en avant de la coupe du coffrage de filtration 5.

La FIGURE 5 montre que l'étage d'ionisation 603 permet d'ioniser les particules 100 présentes dans le flux d'air traversant le système de filtration 6. En l'espèce, les particules 100 sont des particules 100 solides, représentées arbitrairement de façon sphérique. Le flux d'air vicié est représenté par les premières flèches 8. Le flux d'air vicié traverse le conduit de ventilation 4. Il débouche au niveau de l'extrémité 400 du conduit de ventilation 4, ladite extrémité 400 comprenant la grille d'aération 505. La grille d'aération 505 laisse circuler les particules 100. En sortant de l'extrémité 400 du conduit de ventilation 4, le flux d'air vicié opère un changement de direction d'environ 90°, orienté par les façades du coffre de filtration 5.

Les ioniseurs 615, 616 diffusent dans le coffre 3 de filtration des ions 101, destinés à ioniser les particules 100 du flux d'air, créant un vent 102 d'ions 101, ou vent 102 ionique.

Les particules 100, véhiculées par le flux d'air, traversent le vent 102 d'ions 101. Dans le vent 102, les ions 101 adhèrent aux particules 100. Les particules 100 chargées électriquement sont des particules 100 ionisées. Puis, le flux d'air vicié, chargé de particules 100 ionisées, est orienté par le déflecteur central 613 et les déflecteurs latéraux 614 vers l'un des deux collecteurs 606, 607.

Au sein des collecteurs 606, 607, le flux d'air vicié chargé de particules 100 ionisées circule entre les armatures 610. Le flux d'air vicié circule parallèlement aux dites armatures 610. Les particules 100 ionisées sont attirées et collectées contre les armatures 610 chargées en opposition. En sortie des collecteurs 606, 607, le flux d'air est purifié, représenté par les deuxièmes flèches 9.

La FIGURE 6 montre une coupe du coffrage de filtration 5 selon une coupe AA illustrée en FIGURE 3. Le système de filtration 6 est une variante de celui illustré en FIGURE 5.

La FIGURE 6 montre que l'étage d'ionisation 603 comporte un troisième ioniseur 617 situé dans une position intermédiaire entre le premier ioniseur 615 et le deuxième ioniseur 616. Les trois ioniseurs 615, 616 et 617 sont dans le prolongement l'un l'autre. Le troisième ioniseur 617 est situé en regard du déflecteur central 613 de l'étage de collection 604.

Chaque ioniseur 615, 616, 617 comprend des optiques coniques 618. En l'espèce, chaque ioniseur 615, 616, 617 comprend trois optiques coniques 618.

En synthèse, l'invention concerne un ensemble de filtration 1 pour un ouvrant 2 de bâtiment 10, l'ensemble de filtration 1 comportant un coffre 3 13 délimitant un espace de stockage 7 du dispositif occultant 13, un coffrage de filtration 5 solidaire du coffre 3 13 et un conduit de ventilation 4 traversant le coffre 3 13, le conduit de ventilation 4 mettant en communication fluidique l'espace de stockage 7 et le coffrage de filtration 5, via une extrémité 400 du conduit de ventilation 4 extérieure au coffre 3 13 et débouchant dans le coffrage de filtration 5. L'ensemble de filtration 1 comporte en outre un système de filtration 6 du type d'un système de filtration électrostatique. Le système de filtration 6 est logé dans le coffrage de filtration 5 et est configuré pour filtrer des particules 100 présentes dans un flux d'air sortant du conduit de ventilation 4.

Bien sûr, l'invention n'est pas limitée aux exemples qui viennent d'être décrits et de nombreux aménagements peuvent être apportés à ces exemples sans sortir du cadre de 1 invention qui est définie par les revendications.

## Revendications

1. [Ensemble de filtration (1) pour un ouvrant (2) de bâtiment (10), l'ensemble de filtration (1) comportant :
- un coffre (3) destiné à être fixé en applique contre l'ouvrant (2), le coffre (3) délimitant un espace de stockage (7) pour un dispositif occultant (13) l'ouvrant (2) ;
- un conduit de ventilation (4) traversant le coffre (3), le conduit de ventilation (4) mettant en communication fluidique l'espace de stockage (7) et une extrémité (400) du conduit de ventilation (4) extérieure au coffre (3) ;
- un coffrage de filtration (5) solidaire du coffre (3), l'extrémité (400) du conduit de ventilation (4) débouchant dans le coffrage de filtration (5) ;
- un système de filtration (6) logé dans le coffrage de filtration (5), le système de filtration (6) étant configuré pour filtrer des particules (100) présentes dans un flux d'air sortant du conduit de ventilation (4), le système de filtration (6) étant du type d'un système de filtration électrostatique ;
**caractérisé en ce que** le système de filtration (6) comporte :
- un étage d'ionisation (603) de particules (100) présentes dans un flux d'air traversant le système de filtration (6) ;
- un étage de collection (604) situé en aval de l'étage d'ionisation (603), relativement à un sens d'écoulement du flux d'air traversant le système de filtration (6) ;
- un étage de polarisation (605) configuré pour polariser sélectivement l'étage d'ionisation (603) et l'étage de collection (604).

2. Ensemble de filtration (1) selon la revendication 1, dans lequel l'étage d'ionisation (603) comporte un ou plusieurs ioniseurs (615, 616, 617) reliés électriquement en parallèles les uns des autres par rapport à l'étage de polarisation (605).

3. Ensemble de filtration (1) selon l'une quelconque des revendications 1 ou 2, dans lequel l'étage de collection (604) comporte un ou plusieurs collecteurs (606, 607) reliés électriquement en parallèles les uns des autres par rapport à l'étage de polarisation (605), chaque collecteur (606, 607) comportant une pluralité d'armatures (610) situées en regard deux à deux, chaque paire d'armatures (610) situées en regard l'une de l'autre présentant une différence de potentiel non nulle entre elles.

4. Ensemble de filtration (1) selon l'une quelconque des revendications 1 à 3, dans lequel l'étage de polarisation (605) comporte une première source d'énergie électrique (607) configurée pour polariser l'étage d'ionisation (603), et une deuxième source d'énergie électrique (608) configurée pour polariser l'étage de collection (604).

5. Ensemble de filtration (1) selon l'une quelconque des revendications 1 à 4, dans lequel le coffrage de filtration (5) comporte une sortie de ventilation (504) orientée selon une direction coudée par rapport au conduit de ventilation (4) pris au niveau de son extrémité (400).

6. Ensemble de filtration (1) selon la revendication précédente, dans lequel le coffrage de filtration (5) comporte une sortie de ventilation (504) orientée selon une direction perpendiculaire par rapport au conduit de ventilation (4) pris au niveau de son extrémité (400).

7. Ensemble de filtration (1) selon l'une quelconque des revendications 3 à 6, dans lequel l'étage de collection (604) comporte un premier collecteur (606) et un deuxième collecteur (607), les collecteurs (606, 607) étant disposés l'un par rapport à l'autre selon une configuration « en V ».

8. Ensemble de filtration (1) selon la revendication précédente, dans lequel un premier ioniseur (615) de l'étage d'ionisation (603) est située dans le prolongement d'une entrée (608) du premier collecteur (606) de l'étage de collection (604), et un deuxième ioniseur (616) de l'étage d'ionisation (603) est située dans le prolongement d'une entrée (608) du deuxième collecteur (607) de l'étage de collection (604).

9. Ensemble de filtration (1) selon l'une quelconque des revendications 7 ou 8, dans lequel l'étage de collection (604) comporte un déflecteur central (613) reliant le premier collecteur (606) au deuxième collecteur (607).

10. Ensemble de filtration (1) selon l'une quelconque des revendications précédentes, dans lequel l'ensemble de filtration (1) comporte un dispositif de décharge électrostatique couplé électriquement au coffrage de filtration (5) et configuré pour permettre d'évacuer des charges électriques (100) en contact avec le coffrage de filtration (5).

11. Ensemble de filtration (1) selon l'une quelconque des revendications précédentes, dans lequel le coffrage de filtration (5) comporte une trappe articulée permettant d'accéder au système de filtration (6). 1

## Patentansprüche

1. Filteranordnung (1) für eine Öffnung (2) eines Gebäudes (10), wobei die Filteranordnung (1) umfasst:
- einen Kasten (3), der dazu bestimmt ist, an der Öffnung (2) anliegend befestigt zu werden, wobei der Kasten (3) einen Aufbewahrungsraum (7) für eine Vorrichtung (13) begrenzt, die die Öffnung (2) verdeckt;
- einen Lüftungskanal (4), der durch den Kasten (3) verläuft, wobei der Lüftungskanal (4) den Aufbewahrungsraum (7) und ein Ende (400) des Lüftungskanals (4) außerhalb des Kastens (3) in Fluidverbindung bringt;
- eine Filterschalung (5), die mit dem Kasten (3) fest verbunden ist, wobei das Ende (400) des Lüftungskanals (4) in die Filterschalung (5) mündet;
- ein Filtersystem (6), das in der Filterschalung (5) untergebracht ist, wobei das Filtersystem (6) zum Filtern von Partikeln (100) konfiguriert ist, die in einem Luftstrom vorhanden sind, der aus dem Lüftungskanal (4) austritt, wobei das Filtersystem (6) von der Art eines elektrostatischen Filtersystems ist;
**dadurch gekennzeichnet, dass** das Filtersystem (6) umfasst:
- eine lonisierungsstufe (603) für Partikel (100), die in einem Luftstrom vorhanden sind, der durch das Filtersystem (6) verläuft;
- eine Sammelstufe (604), die sich stromabwärts von der lonisierungsstufe (603) befindet, relativ zu einer Strömungsrichtung des Luftstroms, der durch das Filtersystem (6) verläuft;
- eine Polarisationsstufe (605), die zum wahlweisen Polarisieren der lonisierungsstufe (603) und der Sammelstufe (604) konfiguriert ist.

2. Filteranordnung (1) nach Anspruch 1, wobei die lonisierungsstufe (603) einen oder mehrere Ionisatoren (615, 616, 617) umfasst, die parallel zueinander in Bezug auf die Polarisationsstufe (605) elektrisch verbunden sind.

3. Filteranordnung (1) nach einem der Ansprüche 1 oder 2, wobei die Sammelstufe (604) einen oder mehrere Sammler (606, 607) umfasst, die parallel zueinander in Bezug auf die Polarisationsstufe (605) elektrisch verbunden sind, wobei jeder Sammler (606, 607) eine Vielzahl von Armierungen (610) umfasst, die sich paarweise einander gegenüberliegend befinden, wobei jedes Paar von Armierungen (610), die sich einander gegenüberliegend befinden, eine von null verschiedene Potentialdifferenz zwischen ihnen aufweist.

4. Filteranordnung (1) nach einem der Ansprüche 1 bis 3, wobei die Polarisationsstufe (605) eine erste Quelle (607) elektrischer Energie, die zum Polarisieren der lonisierungsstufe (603) konfiguriert ist, und eine zweite Quelle (608) elektrischer Energie umfasst, die zum Polarisieren der Sammelstufe (604) konfiguriert ist.

5. Filteranordnung (1) nach einem der Ansprüche 1 bis 4, wobei die Filterschalung (5) einen Lüftungsauslass (504) umfasst, der in einer abgewinkelten Richtung in Bezug auf den Lüftungskanal (4) ausgerichtet ist, der an seinem Ende (400) aufgenommen wird.

6. Filteranordnung (1) nach dem vorstehenden Anspruch, wobei die Filterschalung (5) einen Lüftungsauslass (504) umfasst, der in einer senkrechten Richtung in Bezug auf den Lüftungskanal (4) ausgerichtet ist, der an seinem Ende (400) aufgenommen wird.

7. Filteranordnung (1) nach einem der Ansprüche 3 bis 6, wobei die Sammelstufe (604) einen ersten Sammler (606) und einen zweiten Sammler (607) umfasst, wobei die Sammler (606, 607) in einer "V"-Konfiguration in Bezug aufeinander eingerichtet sind.

8. Filteranordnung (1) nach dem vorstehenden Anspruch, wobei sich ein erster Ionisator (615) der lonisierungsstufe (603) in der Verlängerung eines Einlasses (608) des ersten Sammlers (606) der Sammelstufe (604) befindet, und sich ein zweiter Ionisator (616) der lonisierungsstufe (603) in der Verlängerung eines Einlasses (608) des zweiten Sammlers (607) der Sammelstufe (604) befindet.

9. Filteranordnung (1) nach einem der Ansprüche 7 oder 8, wobei die Sammelstufe (604) einen zentralen Deflektor (613) umfasst, der den ersten Sammler (606) mit dem zweiten Sammler (607) verbindet.

10. Filteranordnung (1) nach einem der vorstehenden Ansprüche, wobei die Filteranordnung (1) eine Vorrichtung zum elektrostatischen Entladen umfasst, die mit der Filterschalung (5) elektrisch gekoppelt ist und zum Ermöglichen konfiguriert ist, dass elektrische Ladungen (100), die mit der Filterschalung (5) in Kontakt stehen, abgeleitet werden.

11. Filteranordnung (1) nach einem der vorstehenden Ansprüche, wobei die Filterschalung (5) eine gelenkige Klappe aufweist, die es ermöglicht, auf das Filtersystem (6) zuzugreifen.

## Claims

1. A filtration assembly (1) for an opening (2) of a building (10), the filtration assembly (1) comprising:
- a compartment (3) intended to be fixed against the opening (2), the compartment (3) delimiting a storage space (7) for a shading device (13) for the opening (2);
- a ventilation duct (4) passing through the compartment (3), the ventilation duct (4) fluidly connecting the storage space (7) and one end (400) of the ventilation duct (4) outside the compartment (3);
- a filtration casing (5) formed integrally with the compartment (3), the end (400) of the ventilation duct (4) opening into the filtration casing (5);
- a filtration system (6) housed in the filtration casing (5), the filtration system (6) being configured to filter particles (100) present in an air flow exiting the ventilation duct (4), the filtration system (6) being of the electrostatic filtration system type;
**characterized in that** the filtration system (6) comprises:
- an ionization stage (603) of particles (100) present in an air stream passing through the filtration system (6);
- a collection stage (604) located downstream of the ionization stage (603), relative to the direction of flow of the air stream passing through the filtration system (6);
- a polarization stage (605) configured to selectively polarize the ionization stage (603) and the collection stage (604).

2. The filtration assembly (1) according to claim 1, wherein the ionization stage (603) comprises one or more ionizers (615, 616, 617) electrically connected in parallel to each other relative to the polarization stage (605).

3. The filtration assembly (1) according to any one of claims 1 or 2, wherein the collection stage (604) comprises one or more collectors (606, 607) electrically connected in parallel to each other relative to the polarization stage (605), each collector (606, 607) comprising a plurality of armatures (610) facing each other, each pair of armatures (610) located opposite each other having a non-zero difference in potential between them.

4. The filtration assembly (1) according to any one of claims 1 to 3, wherein the polarization stage (605) comprises a first electrical energy source (607) configured to polarize the ionization stage (603), and a second electrical energy source (608) configured to polarize the collection stage (604).

5. The filtration assembly (1) according to any one of claims 1 to 4, wherein the filtration casing (5) comprises a ventilation outlet (504) oriented in an angled direction with respect to the ventilation duct (4) taken at its end (400).

6. The filtration assembly (1) according to the preceding claim, wherein the filtration casing (5) comprises a ventilation outlet (504) oriented in a direction perpendicular to the ventilation duct (4) taken at its end (400).

7. The filtration assembly (1) of any one of claims 3 to 6, wherein the collection stage (604) includes a first collector (606) and a second collector (607), the headers (606, 607) being arranged relative to each other in a "V" configuration.

8. The filtration assembly (1) according to the preceding claim, wherein a first ionizer (615) of the ionization stage (603) is located in the extension of an inlet (608) of the first collector (606) of the collection stage (604), and a second ionizer (616) of the ionization stage (603) is located in the extension of an inlet (608) of the second collector (607) of the collection stage (604).

9. The filtration assembly (1) of any one of claims 7 or 8, wherein the collection stage (604) comprises a central deflector (613) connecting the first collector (606) to the second collector (607).

10. The filtration assembly (1) according to any one of the preceding claims, wherein the filtration assembly (1) comprises an electrostatic discharge device electrically coupled to the filtration casing (5) and configured to allow discharge of electrical charges (100) in contact with the filtration casing (5).

11. The filtration assembly (1) according to any one of the preceding claims, wherein the filtration casing (5) comprises a hinged hatch making it possible to access the filtration system (6).
